Europäisches Patentamt

(19) European Patent Office

Office européen des brevets

(11) Veröffentlichungsnummer: **0 057 762**

**A2**

(12) # EUROPÄISCHE PATENTANMELDUNG

(21) Anmeldenummer: 81109273.3

(22) Anmeldetag: 29.10.81

(51) Int. Cl.³: **H 01 S 3/094**
**H 01 S 3/23**

(30) Priorität: 06.02.81 DE 3104229

(43) Veröffentlichungstag der Anmeldung:
18.08.82 Patentblatt 82/33

(84) Benannte Vertragsstaaten:
AT CH FR GB IT LI

(71) Anmelder: KRAFTWERK UNION
AKTIENGESELLSCHAFT
Wiesenstrasse 35
D-4330 Mülheim (Ruhr)(DE)

(72) Erfinder: Cirkel, Hans-Jürgen, Dr.
Anderlohrstrasse 9
D-8520 Erlangen(DE)

(72) Erfinder: Schmatjko, Klaus-Joachim, Dr.
Kobergerstrasse 32
D-8500 Nürnberg(DE)

(74) Vertreter: Mehl, Ernst, Dipl.-Ing. et al,
Postfach 22 01 76
D-8000 München 22(DE)

(54) Verfahren zur Erzeugung von Laserstrahlen im 16 Mikron-Wellenlängen-Bereich.

(57) Verfahren zur Erzeugung von Laserstrahlen im 16 µm-Wellenlängen-Bereich, insbesondere zur U235-Isotopentrennung, unter Verwendung eines ersten $CO_2$-Gas-Lasers (L1), dessen $CO_2$-Moleküle durch Zuführung von Pumpenergie auf das (00°1)-Energieniveau angehoben werden, und unter Verwendung einer in das Laserrohr einstrahlenden hochintensiven Strahlungsquelle, insbesondere eines zweiten als Injektions-Laser dienenden $CO_2$-Lasers (L2) mit dem Übergang (00°1 → (02°0), zur Besetzung des oberen Laserniveaus für die zu stimulierende 16 µm-Strahlung des ersten Lasers (L1) auf dem Biegeschwingungs-Übergang (02°0 → (01¹0). Der Laser-Pumpvorgang des ersten, tiefgekühlten Lasers (L1) wird mittels elektrischer Hochenergie-Gasentladung nach dem TEA-Prinzip (transversely excited atmospheric pressure laser) durchgeführt. Die Emissionslinie des Injektionslasers (L2) wird in einem Bereich abgestimmt, der den exakten Übergang (00°1) → (02°0) auf ein Rotationsniveau des (02°0)-Niveaus wie auch virtuelle Niveaus (02°0)' in frei wählbarem Abstand zur Linienmitte des exakten Übergangs umfaßt. Die derart verstimmten Injektionslaser-Impulse werden in den 16 µm-Resonator des ersten Lasers (L1) eingekoppelt, so daß beim Übergang auf das untere (01¹0)-Laserniveau dessen $CO_2$-Moleküle Lichtquanten emittieren, deren Wellenlängen um den Betrag der Verstimmung des realen Überganges (02°0) → (01¹0) verschoben sind.

FIG 3

EP 0 057 762 A2

KRAFTWERK UNION AKTIENGESELLSCHAFT    Unser Zeichen

VPA 81 P 9 2 0 3 E

Verfahren zur Erzeugung von Laserstrahlen im
16 µm-Wellenlängen-Bereich

Die Erfindung bezieht sich auf ein Verfahren zur Erzeugung von Laserstrahlen im 16 µm-Wellenlängenbereich, insbesondere zur U235-Isotopentrennung, gemäß Oberbegriff des Anspruchs 1.

Besondere Bedeutung für die Laserisotopentrennung des $UF_6$ besitzt ein geeigneter 16 µm-Laser, weil es mit einem solchen Laser möglich ist, im wesentlichen nur die Moleküle anzuregen, die U235 enthalten.

In der Lasertechnologie ist es bekannt, daß das $CO_2$-Molekül auf dem Übergang $(02^00) \rightarrow (01^10)$ zur Laseremission im 16 µm-Bereich angeregt werden kann. Durch ein geeignetes Pumpverfahren wird zu diesem Zweck das $CO_2$-Molekül in den $(00^01)$ Zustand gehoben und durch eine geeignete hochintensive Strahlungsquelle, z.B. einen $CO_2$-Laser mit dem Übergang $(00^01) \rightarrow (02^00)$, die in den 16 µm-Laser einstrahlt, das obere Laserniveau für die 16 µm-Strahlung besetzt. Die Kinetik dieses Laserüberganges ist in der Zeitschrift "J.Chem.Phys." 71 (5), 1.September 1979, Seiten 2299 - 2312 [1] eingehend beschrieben.

Es sind mehrere Methoden bekannt, Laseremission im 16 µm-Bereich des $CO_2$ zu erreichen, so z.B. durch optisches Pumpen von HBr in einer HBr/$CO_2$-Gasmischung mit einem HBr-Laser und folgender Energieübertragung: HBr* $\rightarrow CO_2$, siehe Zeitschrift "Applied Physics Letters", Vol. 28, No.6, 15.März 1976, Seiten 342 345 [2]. Entsprechende Laserübergänge erhält man auch durch direkte optische Anregung des $CO_2$ mit einem HF-Laser, siehe

Bu 2 Po/26.01.1981                          BAD ORIGINAL

Zeitschrift "Applied Physics Letters", Vol. 29, No.5, 1.September 1976, Seiten 300 - 302 [3] . Der wesentliche Nachteil der letztgenannten beiden Verfahren besteht in der Notwendigkeit eines weiteren kostspieligen Pumplasers; er kann durch eine direkte elektrische Anregung vermieden werden.

Von diesem Prinzip geht ein elektrisch angeregter, gasdynamischer $CO_2$-Laser aus, der durch Modifikation auch im 16 μm-Wellenbereich emittieren kann, siehe Zeitschrift "Applied Physics Letters", Vol. 29, No.6, 25.09.1976, Seiten 360 - 362 [4] . Nachteilig wirkt sich bei diesem gasdynamischen Laser aus, daß die elektrische Anregung in einem Stickstoff-Helium-Gemisch erfolgen muß, das dann durch die Düsen des Lasers strömt, und daß in diesen erst das $CO_2$ zugemischt werden kann. Soll aus wirtschaftlichen  Gründen dasselbe Gas erneut verwendet werden, so müssen aus dem Lasergasgemisch zunächst erst wieder die einzelnen Bestandteile abgetrennt werden. Diese Notwendigkeit und der außerordentlich hohe spezifische Gasdurchsatz belasten das Lasersystem mit kaum vertretbaren Kosten.

Eine direkte elektrische Anregung des $CO_2$-Moleküls unter Umgehung des aufwendigen gasdynamischen Laserprinzips ist für einen im 14 μm-Wellenlängen-Bereich abstrahlenden $CO_2$-Laser beschrieben in der schon mehrfach genannten Zeitschrift "Applied Physics Letters", Vol. 31, No.2, 15.July 1977, Seiten 82 - 84 [5] . Dabei ist in einem Kältebad bei ca. 140 K ein $CO_2$-Laserrohr angeordnet, wie es bei den longitudinal angeregten CW CO-Lasern (CW = continous wave) Anwendung findet, und die elektrische Anregung des $CO_2$ innerhalb eines Gasgemisches $CO_2 : N_2 : He = 1 : 2 : 25$ bei einem Druck von ca. 5 - 18 Torr erfolgt über einen einige Mikrosekunden langen Stromimpuls. Das obere Laserniveau wird durch stimulierte Emission aus dem $(00^{o}1)$ Niveau des abge-kühlten $CO_2$-Gases besetzt, wobei als Transfer-Impuls die Strahlung eines konventionellen TEA-$CO_2$-Lasers in das gekühlte Laserrohr injiziert wird. Mit diesem Verfahren lassen sich in dem interessanten Frequenzbereich jedoch nur geringe Ausgangsenergien erzeugen, die für einen technisch interessanten Isotopentrennprozeß als nicht ausreichend anzusehen sind.

Insbesondere der niedrige Gasdruck (etwa 10 Torr), den das longitudinale Anregungsprinzip vorgibt, bestimmt die niedrigen Ausgangsenergien. Der beschriebene Aufbau verursacht eine hohe Eigeninduktivität des elektrischen Anregungssystems und läßt daher Stromimpulse von weniger als einigen Mikrosekunden Dauer nicht zu. Durch diesen langen Stromimpuls wird jeweils die Vibrationstempera-tur des kalten $CO_2$ erhöht, und damit wird auch die Kinetik für den 16 $\mu$m-$CO_2$-Laser, mit dem sich die vorliegende Erfindung befaßt, ungünstig beeinflußt, weil dann u.a. das untere Laserniveau $(01^{1}0)$ stärker besetzt wird. Durch die Erfindung soll es daher ermöglicht sein, ein im 16 $\mu$m-Wellenbereich abstrahlendes Lasersystem mit einem höheren Gasdruck und mit wesentlich kürzeren Stromanregungsimpulsen zu betreiben, so daß die Energieausbeute im Vergleich zu dem vorerwähnten bekannten Lasersystem wesentlich gesteigert werden kann.

Erfindungsgemäß wird die gestellte Aufgabe bei einem Verfahren mit den eingangs genannten gattungsgemäßen Merkmalen durch die im Kennzeichen des Anspruchs 1 angegebenen Merkmale gelöst. Vorteilhafte weitere Merkmale dieses Verfahrens nach der Erfindung sind in den Unteransprüchen 2 bis 9 angegeben.

Hier wie im folgenden wird unter einem TEA-Laser (= transversely excited atmospheric pressure laser)

ffff ffffffffffff

ein Laser verstanden, der gemäß einer in jüngerer Zeit erfolgten Bedeutungserweiterung mit Gasdrucken von einigen 10 mbar bis in den Überdruckbereich von mehreren bar betrieben werden kann und mit dem Anregungsimpulse mit Halbwertsbreiten von weniger als 100 ns erzielbar sind. Derartige TEA-Laser haben aufgrund ihrer hohen Spitzenleistungen und kurzen Impulsdauern besondere Bedeutung erlangt.

Im folgenden wird das Verfahren nach der Erfindung anhand der Zeichnung näher erläutert. Darin zeigt in schematischer, vereinfachter Darstellung:

Fig. 1 das tiefgekühlte TEA-$CO_2$-Modul des ersten Lasers im Ausschnitt;

Fig. 2 die Gesamtanordnung des ersten und des zweiten, als Injektionslaser dienenden Lasers, in einer Draufsicht stark vereinfacht;

Fig. 3 ein Energieniveau-Schema für die in der Laserkammer des ersten und zweiten Lasers sich abspielenden Energieübergänge;

Fig. 4 in qualitativer Darstellung ein Diagramm zur Verdeutlichung, wie durch Wellenzahl-Abstimmung der Laser-Emission die 235$UF_6$-Absorption optimiert werden kann. Dabei ist als Dimension für die Abszissenachse die Wellenlänge und für die Ordinatenachse die Intensität bzw. Leistungsdichte I $[W/m^2]$ gewählt;

Fig. 5 eine 16/u -Laserkette mit einem gemeinsamen Injektionslaser.

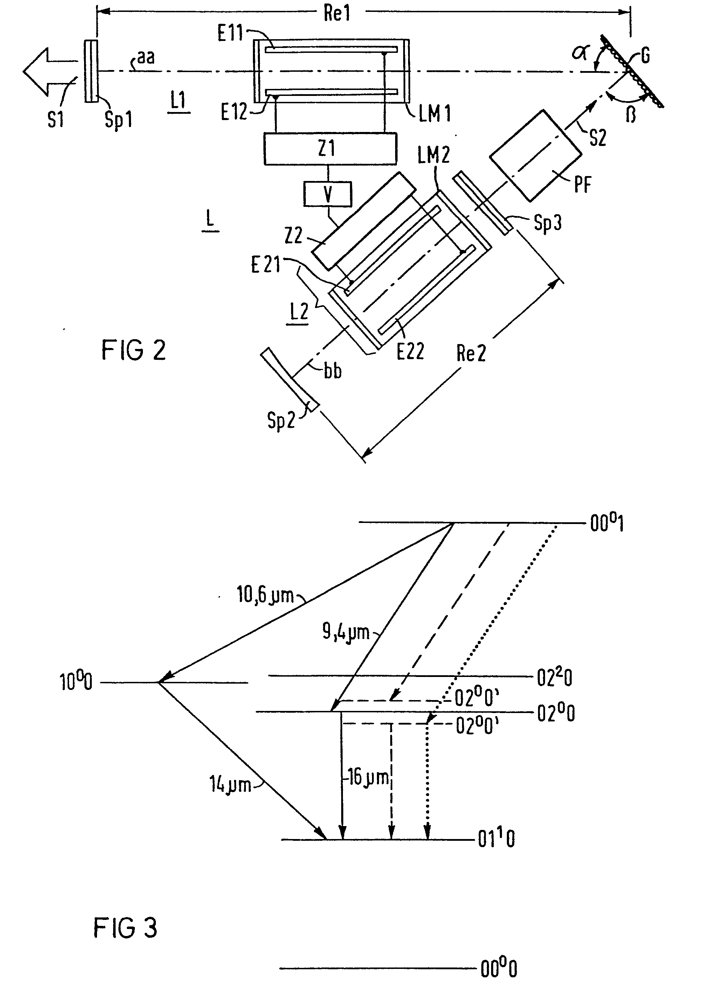

Das in Fig. 2 dargestellte Lasersystem L verwirklicht ein Verfahren zur Erzeugung von Laserstrahlen im 16/um-Wellenlängen-Bereich. Diese Laserstrahlen dienen insbesondere zur isotopenspezifischen (selektiven) An-

regung von $235UF_6$ innerhalb einer $UF_6$-Isotopenmischung. Das Lasersystem L besteht dabei aus einem ersten Laser L1, ausgeführt als TEA-$CO_2$-Gas-Laser, dessen $CO_2$-Moleküle durch Zuführung von Pumpenergie auf das $(00^{o}1)$-Energieniveau angehoben werden (vgl. Figur 3), wobei die Pumpenergie durch eine elektrische Hochenergie-Gasentladung innerhalb des Lasermoduls LM1 aufgebracht wird. Der zugehörige Resonator Re1 ist längs der optischen Achse aa aufgebaut und besteht aus einem Gitter G und einem teildurchlässigen Spiegel Sp1. Über den Spiegel Sp1 wird die 16 µm-Strahlung S1 ausgekoppelt, das Gitter G schließt den Resonator Re1 unter einem geeigneten Winkel $\alpha$ und dient zugleich zur Einkopplung der Strahlung des als Injektionslaser verwendeten Lasers L2 in den Laser L1 unter dem Winkel ß.

Die optische Achse des zweiten Lasers L2, bevorzugt ein TEA-$CO_2$-Laser, ist mit bb bezeichnet, sein Lasermodul mit LM2. Sein Resonator Re2 besteht aus einem 100% reflektierenden Spiegel Sp2, der zur Abstimmung des Injektionslasers L2 durch ein Gitter ersetzt werden kann, und einem teildurchlässigen Spiegel Sp3, über den die 10 µm-Injektionsstrahlung S2 aus dem Laser L2 ausgekoppelt wird.

Zwischen den Injektionslaser L2 und dem Laser L1 durchläuft die Strahlung den Pulsformer PF, den sie selbst auslöst und der für eine steile Anstiegsflanke des Pulses S2 sorgt.

Die Anordnung der Komponenten für die elektrische Entladung in den Lasermodulen LM1 und LM2 entspricht der allgemein bei TEA-Lasern üblichen Form.

Der erste Laser L1 weist im dargestellten Ausführungsbeispiel ein, d.h. mindestens ein, TEA-$CO_2$-Lasermodul
LM1 auf, das auf eine Temperatur nicht tiefer als 150K
gekühlt wird, wobei der erforderliche $CO_2$-Dampfdruck
die Temperatur nach unten begrenzt. Die Elektroden des
Lasermoduls LM1 sind mit E11, E12 bezeichnet, die daran
angeschlossene schnelle Hochspannungs-Zündeinrichtung
mit Z1. Auch der Laser L2 enthält eine entsprechende
Zündeinrichtung Z2 und Elektroden E21, E22. Zwischen den
beiden Zündeinrichtungen Z1, Z2 sorgt die elektronische
Verzögerungsschaltung V dafür, daß die Injektionsimpulse
des zweiten Lasers L2 mit einer definierten Verzögerung
bis zu 100 $\mu$s gegenüber den elektrischen Anregungsimpulsen des ersten Lasers L1 in dessen Resonator Re1
eingekoppelt werden.

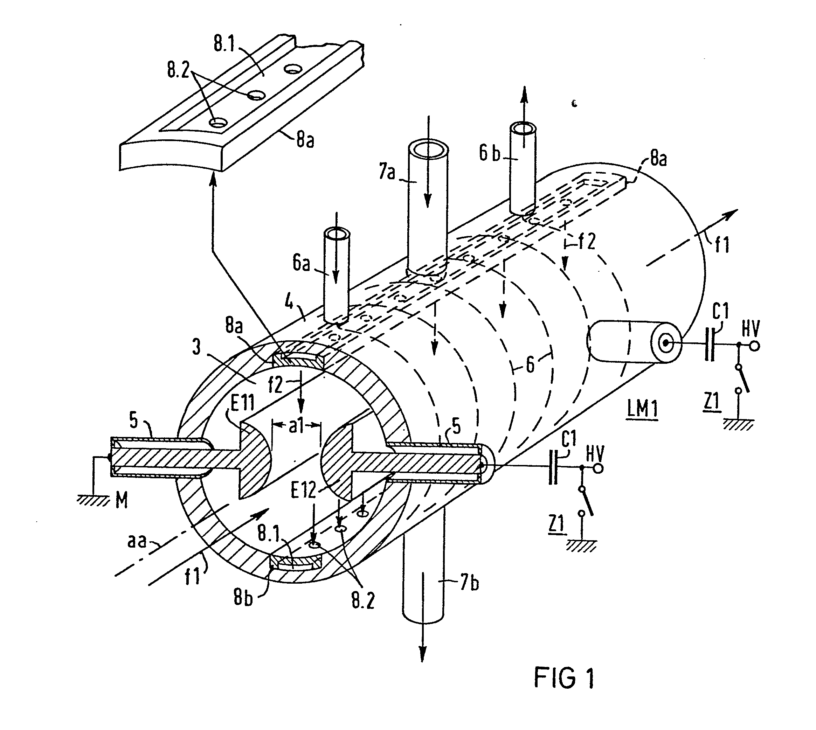

Fig. 1 zeigt eine beispielsweise Ausführung eines
TEA-$CO_2$-Lasermoduls LM1 im Ausschnitt, vergrößert. Mit
einem solchen Modul lassen sich Gasdrucke von einigen
10 mbar bis in den Bereich bar erreichen und Anregungsimpulse mit Halbwertsbreiten von weniger als 100 ns.
Der Entladungsraum 3 des Lasermoduls LM1 wird hier von
einem rohrförmigen Körper 4 eingeschlossen, der üblicherweise als Laserrohr bezeichnet wird. Die im Querschnitt
etwa pilzförmigen Laserelektroden E11, E12 sind parallel
zur optischen Achse aa langgestreckt verlaufend und sich
mit Abstand a1 gegenüberstehend. Das TEA-Modul kann insbesondere so ausgeführt werden, wie es sich bei handelsüblichen TEA-Lasern (z.B. Fa. Lumonics) vorfindet.
Die Laserelektroden E11, E12 bestehen z.B. aus Edelstahl oder Aluminium. Die eine Elektrode E11 ist an das
Massepotential M der Zündeinrichtung Z1, die andere
Elektrode E12 an deren Hochspannungspotential HV angeschlossen. Die gasdichten stutzenförmigen Elektrodendurchführungen sind mit 5 bezeichnet. Von den Schaltelementen der Zündeinrichtung Z1 sind lediglich die beiden Ladekondensatoren C1 angedeutet. Zwecks Tiefkühlung des Entladungsraumes 3 ist dieser von einem Kühlmantel umgeben, der beispielsweise durch einen in den
Außenbereichen des Körpers 4 spiralig verlaufenden, gestrichelt angedeuteten Kühlkanal 6 mit Zuströmstutzen
6a an einem Ende und Abströmstutzen 6b am anderen Ende
verwirklicht sein kann. Das im Entladungsraum 3 strömende Lasergas, das insbesondere eine Gasmischung aus $CO_2$,
$N_2$ und He, z.B. im Mischungsverhältnis 1: 2 : 25, sein
kann, wird gemäß Pfeilen f1 längs eines Strömungspfades
durch den Entladungsraum 3 hindurchgepumpt, welcher ersichtlich in Richtung der optischen Achse aa und zwischen
den einander gegenüberliegenden Laserelektroden hindurch
verläuft. Dieses Lasergas wird durch eine nicht dargestellte externe Kühl- und Gasaufbereitungs-Einrichtung
gepumpt und tritt in den Entladungsraum 3 mit der
schon erwähnten Temperatur von minimal 150K ein. Für
hohe Laserpulsfrequenzen empfiehlt es sich, das Lasergas
längs Strömungspfaden f2 durch den Entladungsraum 3 bzw.
die Laserkammer hindurchzupumpen, welche etwa senkrecht
zur optischen Achse aa und senkrecht zur Entladungsrichtung zwischen den Laserelektroden E11, E12 hindurch
verläuft. Zur Verwirklichung dieser Alternative sind auf
dem Umfang diametral einander gegenüberliegende Gaszuström- und Gas-Abströmstutzen 7a, 7b dargestellt, die
zur gleichmäßigen Verteilung des Lasergases an Düsenleisten 8a, 8b angeschlossen sind. Letztere weisen einen
Längskanal 8.1 in ihrem Inneren anschneidende, in den
Entladungsraum 3 mündende Düsenbohrungen 8.2 auf, wobei
die Längskanäle 8.1 der Düsenleisten wiederum mit den
Kanälen 7.1 der Stutzen 7a, 7b jeweils kommunizieren. Die
Düsenleisten 8a, 8b sind in entsprechende Aussparungen
am Innenumfang des Körpers 4 eingelassen. Es ergibt sich
damit die durch die Pfeile f2 gekennzeichnete Querströmung im Entladungsraum 3 für das Lasergas. Letzteres
kann, bevor es in den Entladungsraum 3 einströmt, zunächst auch als Kühlmittel für das Kühlsystem 6a, 6, 6b verwendet und dann erst in den Entladungsraum 3 gemäß Pfeilen f1 bzw. Pfeilen f2 eingeleitet werden. Man kommt dann mit einem einzigen Kreislauf für das Lasergas und das Kühlmittel aus.

Zur weiteren Erläuterung des erfindungsgemäßen Verfahrens wird im folgenden auf Figuren 2 und 3 bezug genommen. Von besonderer Bedeutung für die Kinetik des 16 µm-Lasers ist, daß (Fig. 3) das obere Laserniveau $(02^{0}0)$ möglichst schnell aufgefüllt wird, um zu verhindern, daß durch Desaktivierungsprozesse vor Beginn der Laseremission die Anregungsenergie $(02^{0}0)$ in die benachbarten Zustände $(10^{0}0)$ der symmetrischen Schwingung und $(02^{2}0)$ der Biegeschwingung abfließt und das untere Laserniveau $(01^{1}0)$ nennenswert besetzt wird. Deshalb wird die Anstiegszeit des Laserimpulses des Injektionslasers L2 auf einen möglichst kleinen Wert unter 50 ns eingestellt, wobei die Leistungsdichte über der Sättigungsleistungsdichte des Überganges $(00^{0}1) \rightarrow (02^{0}0)$ im abgekühlten TEA-CO$_2$-Modul LM1 des ersten Lasers L1 liegt. Dazu wird die Pulsformung durch den Pulsformer PF nach Fig. 2 des Injektionslasers L2 mit aus der Literatur bekannten Methoden, wie z.B. Pockels-Zelle oder Modelocking, durchgeführt. Der Laserimpuls aus dem Injektionslaser wird mit einer definierten Verzögerung bis 100 µs gegenüber dem elektrischen Anregungsimpuls des Lasermoduls LM1 des ersten Lasers in den 16 µm-Resonator Re1 eingekoppelt.

Für das erfindungsgemäße Verfahren ist nun von besonderer Bedeutung, daß die Emissionslinie des Injektionslasers in einem Bereich abgestimmt werden kann, so daß der exakte Übergang $(00^{0}1) \rightarrow (02^{0}0)$ auf ein Rotationsniveau des $(02^{0}0)$-Niveaus wie auch Übergänge auf virtuelle Niveaus $(02^{0}0)'$ in frei wählbarem Abstand zur Linienmitte des exakten Übergangs erfaßt werden. Für den Spezialfall der genauen Abstimmung wird also durch den Injektionslaserimpuls genau die interessierende Rotationslinie des ($02^{o}0$)-Niveaus besetzt. Verwendet man dabei im Injektionslaser L2 einen höheren Druck als im 16/um-Laser L1, dann kann man eine bessere Koinzidenz durch die an sich bekannten Verfahren zur Frequenzstabilisierung des TEA-$CO_2$-Lasers L2 erreichen. In dem beschriebenen Spezialfall der genauen Abstimmung lassen sich eine Anzahl relativ schmalbandiger Laserlinien, die jedoch relativ weit auseinander liegen, im 16/um-Bereich anregen. Von besonderer Bedeutung für die Isotopentrennung des U235 ist jedoch ein gewisser Abstimmbereich um eine dieser Laserlinien herum.

Die Abstimmbarkeit läßt sich durch Resonanzstreuung an den interessierenden Rotationsniveaus der ($02^{o}0$)-Schwingung, die ja eine molekulare Biegeschwingung des $CO_2$ ist, erreichen. Zu diesem Zweck wird die Emissionslinie des Injektionslasers L2, der in diesem Falle bevorzugt ein Hochdruck-TEA-$CO_2$-Laser ist, mit aus der Literatur an sich bekannten Methoden um den Bruchteil einer Wellenzahl aus der Linienmitte verschoben. Ein möglichst kurzer Impuls dieses Lasers mit genügend hoher Leistungsdichte wird in den 16/um-Resonator Re1 des ersten Lasers L1 eingekoppelt, der das gekühlte TEA-$CO_2$-Modul LM1 ausreichender Länge, so wie anhand Fig. 1 prinzipiell erläutert, aufweist.

Durch diesen Injektionslaserimpuls wird im Laser L1 ein in Fig. 3 gestrichelt eingezeichnetes virtuelles Niveau ($02^{o}0$)' erreicht, das z.B. um den Bruchteil einer Wellenzahl oberhalb des realen Niveaus ($02^{o}0$) des $CO_2$-Moleküls entfernt liegt. Die Abstimmung kann aber auch so durchgeführt werden, daß ein unterhalb des realen

Niveaus $(02^{0}0)$ liegende virtuelle Niveau $(02^{0}0)'$ erreicht wird. Welches virtuelle Niveau am günstigsten für die $235UF_6$-Anregung ist, d.h. die größte isotopenspezifische Anregung erreichen läßt, ergibt sich bei der Optimierung des gesamten Trennprozesses. Durch nichtlineare Streuung an einem derartigen virtuellen Niveau emittiert das $CO_2$-Molekül ein Lichtquant, dessen Wellenlänge um den Bruchteil einer Wellenzahl - dem Betrag der Verstimmung - des realen Übergangs verschoben ist. Das untere Laserniveau für diesen Streuprozeß ist wiederum das $(01^{1}0)$-Niveau des $CO_2$-Moleküls. Zur Erweiterung der Abstimm-Möglichkeiten kann ein aus verschiedenen Isotopenverbindungen des $CO_2$ bestehendes Gasgemisch als Lasergas verwendet und die Zusammensetzung und/oder das Mischungsverhältnis der Mischungskomponenten variiert werden.

Zum besseren Verständnis ist in Fig. 3 noch der 10,6 μm-Übergang von $(00^{0}1)$-Niveau auf das $(10^{0}0)$-Niveau und der 14 μm-Übergang vom letztgenannten Niveau auf das $(01^{1}0)$-Niveau eingezeichnet, ferner das $(02^{2}0)$-Niveau. Unterhalb des untersten Biegeschwingungs-Niveaus $(01^{1}0)$ ist das dem nicht angeregten Zustand entsprechende $(00^{0}0)$-Niveau eingezeichnet.

Die Abstimmbarkeit des TEA-$CO_2$-Injektionslasers (fine tuning) ist an sich bekannt, siehe Zeitschrift "Optics Communications", Band 30 vom September 1979, Seiten 414 - 418, und Zeitschrift "Applied Physics Letters", Band 35 vom 1.12.1979, Seiten 835 - 838.

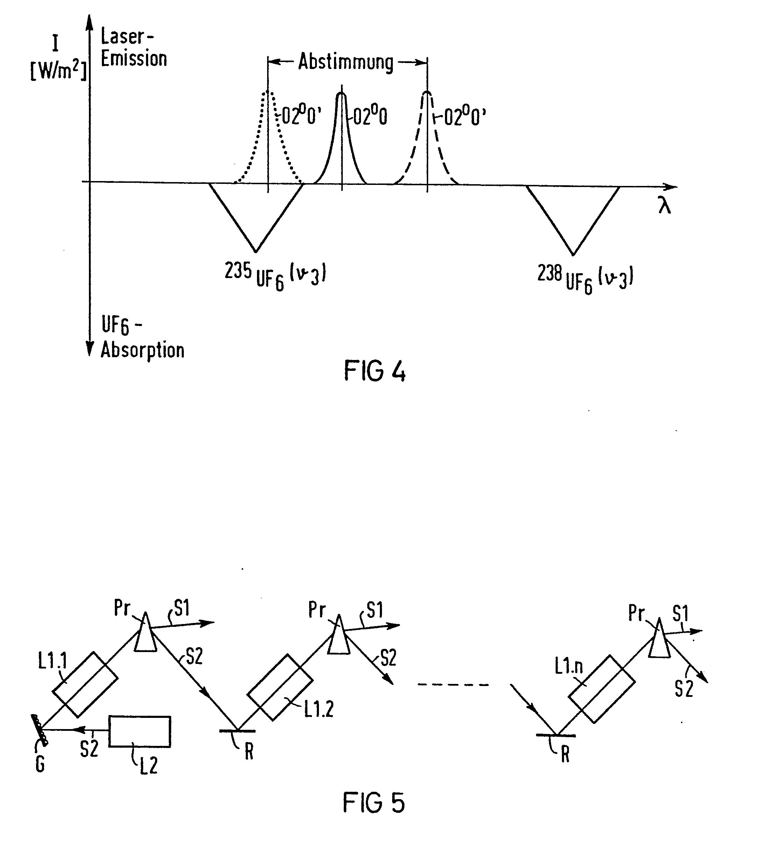

Im Rahmen des Verfahrens nach der Erfindung wird die Abstimmbarkeit der 16 μm-Laserwellenlänge dazu ausgenutzt, eine optimale Selektivität des Anregungsprozesses unter den Voraussetzungen des gewählten technischen Prozesses zu erreichen. Dies kann insbesondere eine exakte Übereinstimmung zwischen einer Laserlinie und der Absorption des selektiv anzuregenden $UF_6$-Isotops bedeuten. Diese Verhältnisse sind in Fig. 4 qualitativ und schematisch dargestellt. Wird der Transfer-Impuls des Injektionslasers L1 genau auf das Energieniveau (02°0) abgestimmt, so emittiert der erste Laser L1 gemäß der in  Fig. 4 stark ausgezogen dargestellten Emissionslinie; wird der Transfer-Impuls um Bruchteile von Wellenzahlen einmal in Richtung auf kleinere, das andere Mal zu größeren Wellenlängen verstimmt, so ergeben sich die in Fig. 4 gestrichelt dargestellten beiden Emissionslinien, denen obere und untere virtuelle Niveaus (02°0)' der Fig. 3 zuzuordnen sind. Bei der Abstimmung des Transfer-Impulses auf ein oberes virtuelles Niveau (02°0)' ergibt sich, wie ersichtlich, eine gute Resonanz mit der/Absorptionslinie des 235$UF_6$, so daß Anregungsresonanz zwischen den eingeschlossenen Lichtquanten und den 235$UF_6$-Molekülen, d.h. deren $\nu_3$-Schwingungsform eintritt. Außerhalb des Abstimmbereiches ist unterhalb der Abszissenachse noch die Absorptionslinie des 238$UF_6$-Moleküls ( $\nu_3$-Schwingungsform) dargestellt.

Eine wesentliche Leistungssteigerung der vom ersten Laser L1 abgegebenen 16 $\mu$m-Impulse kann dadurch erzielt werden, daß als gekühltes TEA-$CO_2$-Lasermodul ein solches der grundsätzlichen Stapel-Bauform nach der älteren Patentanmeldung P 29 32 781.9 verwendet wird, bei dem zur möglichst homogenen lichtbogenfreien Kondensatorentladung im Gasraum zwischen mindestens zwei parallel zur optischen Achse des Lasermoduls sich erstreckenden und mit Abstand einander gegenüberliegenden Laserelektroden ein induktionsarmer Hochspannungsschaltkreis vorgesehen ist, bestehend aus dem TEA-$CO_2$-Lasermodul, einer zugehörigen schnellen Hochspannungsschaltstrecke, ersten und zweiten Bandleiter-Kondensatoren, ohmschen Wider- ständen und zugehörigen Schaltverbindungen, wobei die Beläge der ersten und zweiten Bandleiter-Kondensatoren und ihre dazwischen liegenden dielektrischen Schichten im wesentlichen normal zur optischen Achse des Lasermoduls verlaufen und im wesentlichen parallel zur optischen Achse des Lasermoduls zu einem Kondensatorpaket gestapelt und mit seitlich herausgeführten Anschlußfahnen an die Elektroden des Lasermoduls angeschlossen sind. Weiterhin ist es zur möglichst homogenen, lichtbogenfreien Kondensator-Entladung im Gasraum zwischen den Elektroden des gekühlten TEA-$CO_2$-Lasermoduls besonders vorteilhaft, für dieses die grundsätzliche Pilzelektroden-Bauform mit Vorionisierungsstäben nach der älteren Anmeldung P 30 35 730.3 zu verwenden, bei der mindestens eine der Elektroden mit einem der Stromzuführung dienenden Pilzstiel und einem der Stromverteilung dienenden Pilzhut in den Entladungsraum ragt und wobei zur Vorionisierung des Entladungsraumes zwischen oder benachbart zu den Elektroden mindestens eine stabförmige Hilfselektrode, bestehend aus einem Innenleiter und einem diesen umhüllenden Dielektrikum, achsparallel und mit Überschlagabstand zu einer der Elektroden angeordnet ist. Die vorerwähnten beiden grundsätzlichen Bauformen, nämlich einerseits die Stapelbauform und andererseits die Pilzelektroden-Bauform mit Vorionisierungsstäben, sind auch für den Injektionslaser mit Vorteil anwendbar, wenn eine hohe Injektionsleistung und eine möglichst homogene, lichtbogenfreie Kondensator-Entladung erzielt werden soll.

Werden in einem technischen Trennprozeß mehrere 16 μm-Laser L1.1 ... L1.n benötigt, ist dennoch nur ein selbständiger Injektionslaser L2 notwendig, da jeder 16 μm-Laser L1 zugleich als Verstärker der 10 μm-Strahlung S2 wirkt. Die so verstärkte Strahlung S2 kann dann nach Abtrennung von S1 jeweils in einem

0057762

Prisma Pr im nächsten 16 µm-Laser erneut verwendet werden, wie es in Fig. 5 dargestellt ist. In einer anderen
Ausführung kann auch ein Teil der 16 µm-Strahlung des
jeweils vorausgehenden Lasers L1 in den nächsten zusammen mit der 10 µm-Strahlung eingekoppelt werden, um
damit die Schwelle für das Anschwingen der Laseremission
in diesem zu senken. Durch die Verwendung von Lichtverzögerungsleitungen für die 10 µm-Strahlung S2 in
dieser Kette von Lasern L1.1 ... L1.n ist dann zugleich
eine zeitliche Verzögerung der 16 µm-Laserpulse möglich. Mit R sind in Fig. 5 noch Ablenkspiegel bezeichnet, die zusammen mit den Prismen Pr einen zick-zackförmigen Strahlengang S2 ergeben.

5 Figuren
12 Patentansprüche

Patentansprüche

1. Verfahren zur Erzeugung von Laserstrahlen im 16 $\mu$m-Wellenlängen-Bereich, insbesondere zur U235-Isotopentrennung, unter Verwendung eines ersten $CO_2$-Gas-Lasers, dessen $CO_2$-Molekül durch Zuführung von Pumpenergie auf das $(00^01)$-Energieniveau angehoben werden, und unter Verwendung einer in das Laserrohr einstrahlenden hochintensiven Strahlungsquelle, insbesondere eines zweiten als Injektions-Laser dienenden $CO_2$-Lasers, mit dem Übergang $(00^01) \rightarrow (02^00)$, zur Besetzung des oberen Laserniveaus für die zu stimulierende 16 $\mu$m-Strahlung des ersten Lasers auf dem Biegeschwingungs-Übergang $(02^00) \rightarrow (01^10)$, g e k e n n z e i c h n e t   d u r c h   die folgenden Merkmale:

a) das Lasergasgemisch des ersten Lasers wird in an sich bekannter Weise tiefgekühlt und der Laser-Pumpvorgang mittels elektrischer Hochenergie-Gasentladung nach dem TEA-Prinzip (transversely excited atmospheric pressure laser) in mindestens einem TEA-$CO_2$-Lasermodul als Element eines 16 $\mu$m-Lasers durchge-führt;

b) die Emissionslinie des Injektionslasers wird in einem Bereich abgestimmt, der den exakten Übergang $(00^01) \rightarrow (02^00)$ auf ein Rotationsniveau des $(02^00)$-Niveaus wie auch virtuelle Niveaus $(02^00)'$ in frei wählbarem Abstand zur Linienmitte des exakten Übergangs umfaßt;

c) zur Abstimmung auf ein virtuelles Niveau $(02^00)'$ wird die Emissionslinie des Injektionslasers um den Bruchteil einer Wellenzahl aus der Linienmitte des entsprechenden Übergangs verschoben und der Injektionslaser dabei bevorzugt als Hochdruck-TEA-$CO_2$-Laser betrieben;

d) die derart verstimmten Injektionslaser-Impulse möglichst kurzer Pulsanstiegsflanke werden in den 16 μm-
Resonator des ersten Lasers eingekoppelt, so daß dessen Übergang vom $(00^o1)$-Niveau auf ein sich so ergebendes virtuelles Energieniveau $(02^o0)'$ erfolgt, welches
ebenso um den Bruchteil einer Wellenzahl vom realen
$(02^o0)$-Niveau der $CO_2$-Moleküle entfernt liegt, so daß
durch nichtlineare Streuung an diesem virtuellen
Energie-Niveau beim Übergang auf das untere $(01^10)$-
Laserniveau die $CO_2$-Moleküle Lichtquanten emittieren,
deren Wellenlängen wiederum um denselben Bruchteil
einer Wellenzahl - dem Betrag der Verstimmung - des
realen Überganges $(02^o0) \rightarrow (01^10)$ verschoben sind.

2. Verfahren nach Anspruch 1, d a d u r c h   g e -
k e n n z e i c h n e t , daß mit einer Pulsbreite
$\leq$ 50 ns bei möglichst steilen Anstiegsflanken des
Injektionslasers gearbeitet wird und daß die Leistungsdichte der Injektionslaser-Strahlung über der  Sättigungsleistungsdichte des gewählten Prozesses für den angestrebten 16 μm-Übergang im abgekühlten TEA-$CO_2$-Lasermodul
liegt.

3. Verfahren nach Anspruch 1 oder 2, d a d u r c h
g e k e n n z e i c h n e t , daß der Injektionslaser-
Impuls mit einer definierten Verzögerung bis zu 100 μs
gegenüber dem elektrischen Anregungsimpuls des ersten
Lasers in dessen 16 μm-Resonator eingekoppelt wird.

4. Verfahren nach Anspruch 1, d a d u r c h  g e -
k e n n z e i c h n e t , daß zwecks Erweiterung der Abstimm-Möglichkeiten ein aus verschiedenen Isotopenverbindungen des $CO_2$ bestehendes Gasgemisch verwendet und
die Zusammensetzung und/oder das Mischungsverhältnis der
Mischungskomponenten variiert wird.

5. Verfahren nach einem der Ansprüche 1 bis 4, d a - d u r c h g e k e n n z e i c h n e t , daß durch das Lasermodul das Lasergas längs eines Strömungspfades hindurchgepumpt wird, welcher in Richtung der optischen Achse und zwischen den einander gegenüberliegenden Laserelektroden hindurch verläuft.

6. Verfahren nach einem der Ansprüche 1 bis 4, insbesondere für hohe Laserpulsfrequenzen, d a d u r c h g e k e n n z e i c h n e t , daß durch das Lasermodul das Lasergas längs eines Strömungspfades hindurchgepumpt wird, welcher etwa senkrecht zur optischen Achse und senkrecht zur Entladungsrichtung zwischen den Laserelektroden hindurch verläuft.

7. Verfahren nach einem der Ansprüche 1 bis 6, d a - d u r c h g e k e n n z e i c h n e t , daß als gekühltes TEA-$CO_2$-Lasermodul ein solches der grundsätzlichen Stapel-Bauform nach der älteren Patentanmeldung P 29 32 781.9 verwendet wird, bei dem zur möglichst homogenen lichtbogenfreien Kondensatorentladung im Gasraum zwischen mindestens zwei parallel zur optischen Achse des Lasermoduls sich erstreckenden und mit Abstand einander gegenüberliegenden Laserelektroden ein induktionsarmer Hochspannungsschaltkreis vorgesehen ist, bestehend aus dem TEA-$CO_2$-Lasermodul, einer zugehörigen schnellen Hochspannungsschaltstrecke, ersten und zweiten Bandleiter-Kondensatoren, ohmschen Widerständen und zugehörigen Schaltverbindungen, wobei die Beläge der ersten und zweiten Bandleiterkondensatoren und ihre dazwischenliegenden dielektrischen Schichten im wesentlichen normal zur optischen Achse des Lasermoduls verlaufen und im wesentlichen parallel zur optischen Achse des Lasermoduls zu einem Kondensatorpaket gestapelt und mit seitlich herausgeführten Anschlußfahnen an die Elektroden des Lasermoduls angeschlossen sind.

0057762

8. Verfahren nach Anspruch 7, d a d u r c h  g e -
k e n n z e i c h n e t , daß zur möglichst homogenen,
lichtbogenfreien Kondensator-Entladung im Gasraum zwischen den Elektroden des gekühlten TEA-$CO_2$-Lasermoduls
für dieses die grundsätzliche Pilzelektroden-Bauform
mit Vorionisierungsstäben nach der älteren Anmeldung
P 30 35 730.3 verwendet wird, bei der mindestens eine
der Elektroden mit einem der Stromzuführung dienenden
Pilzstiel und einem der Stromverteilung dienenden Pilzhut in den Entladungsraum ragt, wobei zur Vorionisierung
des Entladungsraumes zwischen oder benachbart zu den
Elektroden mindestens eine stabförmige Hilfselektrode,
bestehend aus einem Innenleiter und einem diesen umhüllenden Dielektrikum, achsparallel und mit Überschlagabstand zu einer der Elektroden angeordnet ist.

9. Verfahren nach Anspruch 7 und 8, d a d u r c h  g e -
k e n n z e i c h n e t , daß für den Injektionslaser der
gleiche grundsätzliche Aufbau mit in Laserachsrichtung
gestapelten Bandleiterkondensator-Belägen und -dielektrischen Schichten mit pilzförmigen Elektroden und mit
Vorionisierungsstäben verwendet wird wie für den ersten
Laser.

10. Verfahren nach einem der Ansprüche 1 bis 9, d a -
d u r c h  g e k e n n z e i c h n e t , daß die
10/um-Strahlung (S2) eines selbständigen Injektionslasers (L2) in den Strahlengang einer Laserkette eingekoppelt wird, die aus mindestens zwei, bezüglich der
10/um-Strahlung (S2) des Injektionslasers (L2) optisch
in Reihe geschalteten 16/um-Lasern (L1.1, L1.2 ... L1.n)
besteht.

0057762

- 18 -    VPA  81 P 9 2 0 3 . E

11. Verfahren nach Anspruch 9, d a d u r c h   g e -
k e n n z e i c h n e t , daß mittels Strahlenablenkeinrichtungen, z.B. Prismen (Pr), die 16 μm-Strahlung
(S1) am Ausgang des jeweiligen 16 μm-Lasers zumindest
teilweise ausgekoppelt, dagegen die 10 μm-Strahlung
(S2) in den Strahlengang des nächstfolgenden 16 μm-
Lasers eingekoppelt wird.

12. Verfahren nach Anspruch 9, d a d u r c h   g e -
k e n n z e i c h n e t , daß durch Führung der
10 μm-Strahlung (S2) des Injektionslasers (L2) über
Lichtverzögerungsleitungen innerhalb des Strahlenganges
der Laserkette (L1.1, L1.2 ... L1.n) die 16 μm-Laserpulse
gegenseitig verzögert werden.

FIG 1

FIG 2

FIG 3

$I$ [W/m$^2$] Laser-Emission

Abstimmung

02$^0$0'  02$^0$0  02$^0$0'

$^{235}$UF$_6$ ($\nu_3$)          $^{238}$UF$_6$ ($\nu_3$)

$\lambda$

UF$_6$ - Absorption

FIG 4

Pr  S1        Pr  S1        Pr  S1

L1.1          S2            L1.n

S2                          S2

G  S2  L2  R  L1.2  R

FIG 5